# EUROPÄISCHE PATENTSCHRIFT

(11) **EP 3 770 804 B1**
(45) Veröffentlichungstag und Bekanntmachung des Hinweises auf die Patenterteilung: **16.04.2025**
(21) Anmeldenummer: 20185647.3
(22) Anmeldetag: 14.07.2020
(51) Int. Cl.: G06V 20/58

(54) **FLURFÖRDERZEUG MIT EINER OBJEKTERKENNUNG**
INDUSTRIAL TRUCK WITH OBJECT DETECTION
CHARIOT DE MANUTENTION À DÉTECTION D'OBJETS

(30) Priorität: 24.07.2019 DE 102019120022
(43) Veröffentlichungstag der Anmeldung: 27.01.2021
(73) Patentinhaber: Jungheinrich Aktiengesellschaft, 22047 Hamburg (DE)
(72) Erfinder: Bistry, Hannes, 25421 Pinneberg (DE); Rolink, Jérôme, 23843 Bad Oldesloe (DE)
(74) Vertreter: Hauck Patentanwaltspartnerschaft mbB

(56) Entgegenhaltungen:
- WO-A1-2009/115918
- WO-A1-2017/104387
- US-A1- 2019 035 276
- BUI MINH TUAN ET AL: "The Analysis of the Effect of the Parameters on Indirect Distance Measurement using a Digital Camera", 2019 INTERNATIONAL CONFERENCE ON MILITARY TECHNOLOGIES (ICMT), IEEE, 30 May 2019 (2019-05-30), pages 1 - 9, XP033635012, DOI: 10.1109/MILTECHS.2019.8870101

## Beschreibung

Die vorliegende Erfindung betrifft ein Flurförderzeug mit einer Objekterkennung. Hierbei kann es sich um ein ferngesteuertes oder um ein automatisch oder teilautomatisch gesteuertes Flurförderzeug handeln. Grundsätzlich können auch herkömmliche Flurförderzeuge mit einer Bedienung durch den Fahrer mit einer Objekterkennung ausgestattet sein, die dann ein Assistenzsystem für den Fahrer unterstützt.

Bei der Objekterkennung handelt es sich allgemein um eine rechnergestützte Objekterkennung, bei der aus der Umgebung des Flurförderzeugs stammende Daten im Hinblick auf vorliegende Gegenstände, Personen, aufzunehmende Lasten und weitere Objekte in der Umgebung erkannt werden. Die Erkennung umfasst im engeren Sinne nur ein Zuordnen von Objektkontext zu Koordinaten in einem zweidimensionalen optischen Bild. In der Regel sind die zu erkennenden Objekte durch eine einfache geometrische Kontur umschrieben, wobei die Kontur nicht identisch mit dem zu erkennenden Objekt sein muss, sondern auch einen größeren oder kleineren räumlichen Bereich umfassen kann. In der Regel wird eine Pixelposition für einen definierten Bezugspunkt einer Kontur angegeben, beispielsweise bei einer rechteckigen Kontur wird eine linke untere Ecke als Pixelwert ausgegeben, gegebenenfalls kann hier noch eine Orientierung, also ein Winkel gegenüber der Horizontalen mit angegeben werden. Für die Verwendung einer Objekterkennung existieren zahllose verschiedene Ansätze, die jeweils die entsprechenden Sensordaten auswerten und für eine weitere Verarbeitung das erkannte Objekt ausgeben.

Die vorliegende Erfindung betrifft eine Objekterkennung, die eine Videokamera und einen Abstandssensor vorsieht. Die Videokamera kann in der Objekterkennung und ihren Algorithmen Einzelbilder oder eine Abfolge von Bildern auswerten.

Die aufgenommenen Bilder sind selbstverständlich ein zweidimensionales Feld, bei dem jedem Pixelwert ein Bildwert zugeordnet ist, der sich je nach Ausgestaltung der Kamera auf Helligkeit, Farbwert und der gleichen bezieht. Problematisch an der Auswertung von Videobildern für die Objekterkennung ist, dass eine räumliche Tiefeninformation fehlt, ein Gegenstand in großer Entfernung erscheint klein, jedoch kann dieser auch ein verkleinertes Objekt nahe an der Videokamera sein. Es ist daher denkbar, stereometrische Kameras zu verwenden, die optisch ausreichend Informationen für eine Tiefenbestimmung besitzen.

Für den Einsatz von selbstfliegenden Drohnen ist aus CN 108227738 bekannt, ein vor der Drohne liegendes Hindernis mithilfe von einem Millimeterradar zu detektieren, dies mithilfe einer Kamera zu fotografieren und das Bild des Hindernisses dahingehend zu analysieren, dass ein Weg gefunden wird, um in einem vorbestimmten Abstand um das Hindernis herumzufliegen. Eine Objekterkennung im engeren Sinne findet hierbei nicht statt, es wird lediglich ein Hindernis umflogen.

Aus WO 2009/115918 A1 ist ein Bilderkennungsgerät bekannt, bei dem aus einem Bild ein Objektkandidat vor einem Hintergrund ermittelt und mit Hilfe von Bewegungsvektoren beschrieben wird. Zu dem Objektkandidaten wird eine Entfernung geschätzt, die mit Hilfe einer Abstandsmesseinrichtung überprüft wird. Bei zu großen Abweichungen wird der Objektkandidat verworfen und es wird nach weiteren Objektkandidaten gesucht.

Aus US 2019/035276 A1 ist ein Warnsystem für ein fahrendes Fahrzeug bekannt geworden, das aufgenommene straßenbezogene Bilder in Echtzeit analysiert und ein Warnsignal bei unterschreiten eines Sicherheitsabstandes ausgibt.

Der Erfindung liegt die Aufgabe zugrunde ein Flurförderzeug mit einer Objekterkennung bereitzustellen, das mit möglichst einfachen Mitteln auch Tiefeninformationen aus dem Bild verarbeiten kann.

Erfindungsgemäß wird die Aufgabe durch ein Flurförderzeug mit den Merkmalen aus Anspruch 1 gelöst. Vorteilhafte Ausgestaltungen bilden die Gegenstände der Unteransprüche.

Das erfindungsgemäße Flurförderzeug ist mit einer Objekterkennung ausgestattet. Die Objekterkennung weist eine Videokamera und einen Abstandssensor aus. Die Objekterkennung ist dazu ausgebildet, für mindestens eine Art von Objekt eine Übereinstimmung in den aufgenommenen Bildern der Videokamera festzustellen. Die Bilder der Videokamera werden hierbei einzeln oder als kontinuierliche Abfolge von Bildern auf eine Übereinstimmung hin ausgewertet. Erfindungsgemäß ist vorgesehen, dass aus dem erkannten Objekt in dem Bild ein Abstandswert für das Objekt ermittelt wird. Zudem ist vorgesehen, mit dem Abstandssensor räumliche Abstände im Bereich des erfassten Objektes zu ermitteln. Durch die Objekterkennung ist dann vorgesehen, die ermittelten Abstandswerte mit den gemessenen Abstandswerten zu vergleichen. Das erfindungsgemäße Flurförderzeug besitzt also eine Objekterkennung, bei der die aus dem oder den aufgenommenen Bildern erfassten Abstandswerte mithilfe eines Abstandssensor plausibilisiert werden. Durch die Zusammenarbeit der Videokamera und des Abstandssensors und die gemeinsame Auswertung deren Daten, entsteht eine große Zuverlässigkeit bei der Objekterkennung.

Erfindungsgemäß erfolgt die Objekterkennung über ein Template, das zur Anpassung an die Entfernung des Objektes in seinen Abmessungen bei gleichbleibenden Seitenverhältnissen skaliert wird. Der Abstand des bekannten Objektes wird dann aus den Seitenverhältnissen ermittelt. Bei der Objekterkennung folgt also in einem ersten Schritt das Absuchen eines aufgenommenen Bildes auf Ähnlichkeiten mit dem Template. Befindet sich der zu erkennende Gegenstand näher an der Kamera oder weiter von dieser fort, wird das Bild erneut mit einem maßstäblich größeren oder einem kleineren Template abgesucht. Bei der Skalierung des Templates, bleiben die Seitenverhältnisse erhalten, so dass bei erzielter Übereinstimmung mit dem Template aus dessen Seitenverhältnissen Informationen über einen räumlichen Abstand des erfassten Objekts gewonnen werden kann.

In einer bevorzugten Ausgestaltung ist der Abstandssensor dazu ausgebildet zu den gemessenen räumlichen Abständen auch einen Winkel zu erfassen, unter dem der räumliche Abstand gemessen wird. Dieser Winkel, der gelegentlich auch als Detektionswinkel bezeichnet wird, beschreibt also mit dem Abstandssensor im Ursprung seines Koordinatensystems, Abstand und Winkel als Koordinaten eines erfassten Objekts. Durch die Verwendung von Detektionsmitteln ist insbesondere der Vergleich zwischen dem ermittelten Abstandswert und dem gemessenen Abstandswert erleichtert, da bevorzugt auch aus der Objekterkennung heraus ein Detektionswinkel bestimmt werden kann.

In der erfindungsgemäßen Ausgestaltung der Objekterkennungseinheit wird aus den Abstandsdaten, die der Abstandssensor aufzeichnet, eine perspektivische Transformation des Objekts im Raum erfasst. Liegt eine solche perspektivische Transformation des Objekts vor, kann das Template des zu erkennenden Objekts entsprechend angepasst werden. Dies erhöht die Erkennungsrate und erweitert den Einsatzbereich für die Objekterkennung deutlich. Der Begriff perspektivische Transformation bezeichnet hierbei die perspektivische Verzerrung, die durch eine nicht frontale Stellung des zu erkennenden Objektes relativ zu der Kamera vorliegt. Die perspektivische Transformation eines Templates kann beispielsweise vorgenommen werden, wenn in dem aufgenommenen Bild ein Objekt erkannt wurde und bei der Vermessung dessen Abstandswerte sich zeigt, dass ein Objekt vermutlich nicht frontal zu der Videokamera angeordnet ist, sondern leicht schräg mit einem zu- oder abnehmenden Abstand zur Kamera. Durch eine entsprechende Anpassung des Templates kann dann beispielsweise zusätzlich zu der Plausibilisierung der Daten aus der Abstandsmessung, noch eine perspektivische Transformation des Templates vorgenommen werden, was dann die Erkennungsrate zusätzlich vergrößert.

In einer weiter bevorzugten Ausgestaltung liefert der Abstandssensor eine Menge von Abstandswerten in einer Koordinatendarstellung an die Objekterkennungseinheit. Die Objekterkennungseinheit wertet diese Abstandswerte im Hinblick auf die ermittelten Abstandswerte hin aus, wobei die Koordinatendarstellung kartesische Koordinaten oder auch einen Abstandswert mit einem Detektionswinkel aufweisen kann. Dies kann beispielsweise erfolgen, indem die Bildwerte, d. h. die Pixelkoordinaten in räumliche Koordinaten umgerechnet werden, die dann durch die jeweiligen Abstandswerte die Position eindeutig festlegen. Die Umrechnung erfolgt hierbei beispielsweise von den Bilddaten mit den Pixelkoordinaten hin zu Koordinaten im kartesischen Raum.

Bevorzugt ist die Objekterkennung dazu ausgebildet, aus der Lage des erkannten Objekts im aufgenommenen Bild und aus den ermittelten Abstandswerten die Position des Objekts im dreidimensionalen Raum zu bestimmen.

Hierbei wird auf die intrinsischen Kameraparameter zurückgegriffen, die beispielsweise durch eine Kalibrierung mit einem Schachbrettmuster, einem Gitternetz oder dergleichen, gewonnen werden.

In einer bevorzugten Ausgestaltung handelt es sich bei dem Abstandssensor um einen Radarsensor, insbesondere um einen Millimeterradarsensor. Radarsensoren ergeben zuverlässig Abstandswerte über einen relevanten Bereich von wenigen Zentimetern und einigen Metern. Insbesondere die Verwendung von Millimeterradarsensoren bieten den Vorteil, dass die Sensoren kompakt gebaut werden können und sich gut auch in ein Flurförderzeug, beispielsweise im Bereich der Gabelspitze integrieren lassen.

In einer bevorzugten Ausgestaltung ist das erfindungsgemäße Flurförderzeug mit einem anzeigenden Assistenzsystem ausgestattet, mit dem in einem Display das aufgenommene Bild und das erkannte Objekt dargestellt werden können. Weitere Informationen zum Abstand des Objektes können ebenfalls in dem Assistenzsystem für den Benutzer angezeigt werden.

Nachfolgend wird die Erfindung mithilfe von zwei Figuren näher erläutert.

Es zeigen:
- Figur 1: ein selbsttätig fahrendes Flurförderzeug und
- Figur 2: eine Objekterkennung mit einer Videokamera und eines Millimeterradars.

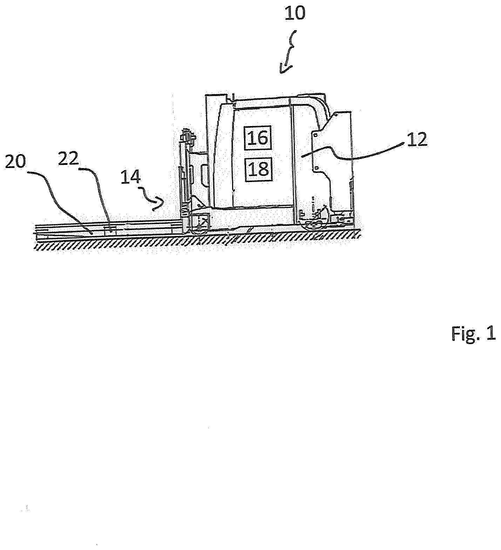

Figur 1 zeigt in einer Ansicht von der Seite ein fahrerloses Transportsystem, das über einen hohen Grad an Automatisierung verfügt. Das Transportsystem ist als ein Flurförderzeug 10 ausgebildet, das ein Lastteil 14 und ein Antriebsteil 12 besitzt. Im Antriebsteil 12 sind beispielsweise eine präzise Navigationstechnik 16 und eine zuverlässige Objekterkennung 18 vorgesehen. Beide Bestandteile des Antriebsanteils 12 sind in Figur 1 schematisch als Blöcke 16, 18 dargestellt, wobei dies nicht bedeutet, dass Navigationstechnik und Objekterkennung in Form von zwei separaten Modulen ausgebildet sein müssen. Vielmehr können Objekterkennung, Navigation und gegebenenfalls weitere Module in eine Steuereinheit integriert sein.

Figur 1 weist beispielsweise in seinem Lastteil 14 eine Lastgabel 20 mit einer zugehörigen Palette 22 auf. Die Lastgabeln 20 können je nach Ausgestaltung des Lastteils 14 mehr oder weniger angehoben werden, wobei auch das Anheben und Absetzen einer Last automatisch erfolgen kann.

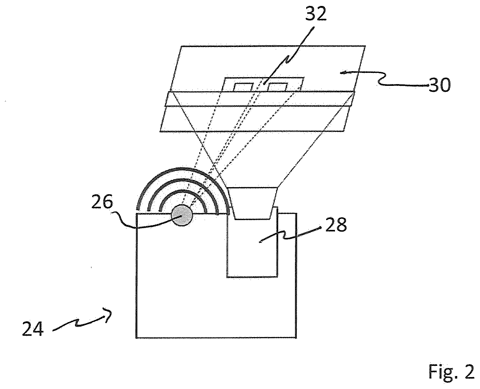

Figur 2 zeigt in einer erweiterten Ansicht eine Objekterkennung 24 mit einem Millimeterradar 26 als Abstandssensor und einer Videokamera 28. Die Videokamera 28 zeichnet ein zweidimensionales Bild 30 auf. In dem Bild 30 wird ein Template 32 für eine Palette erkannt. Dies bewirkt, dass das Millimeterradar 26 im Bereich der erkannten Palette und seines Templates eine Abstandsmessung vornimmt.

Wie bereits angesprochen, existieren eine Vielzahl von Methoden zur Objekterkennung in 2D-Bild-Daten. Häufig liegt das Ergebnis an der Objekterkennung als gelabelte Liste von Rechtecken in Pixelkoordinaten vor, beispielsweise als der Eintrag "Holzpalette X1: 20 Y1: 20 bis X2: 120, Y2: 40". Diese Pixelkoordinaten können, da sie sich auf das aufgenommene Bild beziehen, nicht für Steuerungsfunktionen und für sonstige Zwecke direkt eingesetzt werden. Es ist erforderlich hier zuerst metrische Informationen über die Objektposition zu gewinnen. Unter folgenden Bedingungen kann aus den Pixelkoordinaten dennoch eine metrische Information des Objekts ermittelt werden:
- die reale Größe des gesuchten Objekts muss bekannt sein, beispielsweise die Breite von 80 cm für eine Holzpalette,
- die intrinsischen Kameraparameter müssen bekannt sein, da sich aus ihnen das horizontale und vertikale Sichtfeld der Kamera bestimmt und
- das Objekt sollte bevorzugt ohne Winkelversatz von vorne aufgenommen sein.

Die genannten Informationen können in einem überbestimmten Gleichungssystem, metrische Informationen über die 3D-Position der Kamera, relativ zum Objekt liefern. Dies ist der ermittelte Abstand.

Es ist wichtig sich vor Augen zu führen, dass die Objekterkennung immer eine probabilistische Operation ist. Objekte werden mit einer bestimmten Wahrscheinlichkeit detektiert, wobei hier zwischen False-positiv und False-negativ zu unterscheiden ist. False-positiv liegt vor, wenn ein Objekt erkannt wurde (positiv), wo sich kein Objekt befindet. False-negativ liegt vor, wenn ein vorhandenes Objekt nicht erkannt wurde. Die Algorithmen zur Bilderkennung balancieren häufig unter Verwendung von Schwellwerten diese beiden Wahrscheinlichkeiten gegeneinander aus, um zu einer guten Erkennungsrate zu gelangen.

Wird ein Objekt erkannt, so wird neben dem Label "Holzpalette", seinen Koordinaten auch ein Wert für die Zuverlässigkeit der Erkennung, beispielsweise einer Wahrscheinlichkeit von 90 % ausgegeben. Hierbei handelt es sich um eine geschätzte Wahrscheinlichkeit oder Zuverlässigkeit, die beispielsweise an Trainingsdaten bestimmt wird.

Ein besonderes Problem bei der 2D-Objekterkennung stellt die Tatsache dar, dass vorausgesetzt man hätte ein Objekt identisch im Maßstab 1:2 nachgebaut, nicht zwischen diesem und dem doppelt so weit entfernten Originalobjekt unterschieden werden könne. Dies stellt ein Problem dar, weil oft Strukturen der Umgebung fälschlicherweise einem Objekt ähneln und als Objekt klassifiziert werden können. Die erfindungsgemäß vorgesehene Kombination mit einem Abstandssensor und insbesondere einem mmWave-Radarsensor mit einer 2D-Kamera, liefert den entscheidenden Vorteil, dass ähnliche Strukturen mit anderen Entfernungswerten herausgefiltert werden können und nicht fälschlich erkannt werden können.

Bei Unterbringung der beiden Messeinheiten in einem Gehäuse ist der Abstand der Messeinheiten zueinander bekannt. Der Radarsensor liefert eine Reihe von Reflexionspunkten jeweils im kartesischen Koordinatensystem, bezogen auf den Abstandssensor als Ursprung des Koordinatensystems. Durch eine Transformation können die Reflexionspunkte des Abstandssensors in das Messkoordinatensystem der 2D-Kamera transformiert werden. Mittels der intrinsischen Kameraparameter kann nun berechnet werden, mit welchem Bildpunkt die Reflexionspunkte entsprechen, insbesondere auch unter Verwendung der Abstandswerte und des Detektionswinkels.

Dies ist die Voraussetzung für eine Plausibilisierung der Daten. Für die Objekte, für die via 2-D-Objekterkennung eine 3-D-Position im Raum berechnet wurde, kann nun geprüft werden, ob in entsprechenden Bildbereichen auch Radarreflexionen vorhanden sind, bei denen der Entfernungswert korrespondiert. Nur in diesem Fall wird die Erkennung als gültiges Objekt ausgegeben. Auf diese Weise kann für den Fall, dass eine ähnliche Struktur in der Umgebung ein False-positiv ausgelöst hat, der Fehler erkannt werden. Das heißt, die Genauigkeit der Objekterkennung steigt durch das Verfahren.

Bei dem erfindungsgemäßen Verfahren dient die zusätzliche Abstandsmessung zur nachträglichen Validierung der Erkennungsergebnisse. Zusätzlich können die Bildinformationen bei der 2-D-Objekterkennung eingesetzt werden:
- Bei der Objekterkennung wird häufig ein Template in verschiedener Skalierung iterativ über das Bild gelegt und die Korrespondenz ermittelt.
- Bei jedem Durchlauf wird das Template skaliert, um verschieden weit entfernte Objekte zu detektieren.
- Wenn nun bereits via Radarreflexion bekannt ist, in welchen Entfernungen ein Objekt vorhanden sein kann, können bei der Templateskalierung nur die Skalierungsstufen überprüft werden, die aufgrund der gemessenen Distanzen, der intrinsischen Kameraparameter und der Objektgröße möglich sind. Hervorzuheben ist hier, dass neben der Erhöhung der Genauigkeit der Ergebnisse auch Rechenzeit für die Objekterkennung gespart wird, da unplausible Ergebnisse von vornherein gar nicht erst geprüft werden.
- Ebenfalls ist es möglich, dass über die Auswertung mehrere Punkte des Millimeter-Wellenradars die Orientierung der Objektoberfläche bestimmt werden kann. Hiermit kann das Problem adressiert werden, dass ein Objekt unter einem Winkel im 2D-Bild abgebildet ist. Die Objekterkennung mit dem Template aus der Frontansicht würde scheitern oder eine große Unzuverlässigkeit beinhalten. Ist nun ein Winkel aus der Abstandsmessung bekannt, so kann zur erfolgreichen Objekterkennung beispielsweise das 2D-Bild optisch transformiert werden oder das Template in dem richtigen Winkel verwendet werden oder ein speziell für den vorliegenden Winkel geeignetes Template gewählt werden.

Das erfindungsgemäße Flurförderzeug mit seinem zusätzlichen Abstandssensor, dessen Information in dem erfassten Bild verarbeitet wird, erhöht die Genauigkeit der Objekterkennung erheblich.

### Bezugszeichenliste

- 10: Flurförderzeug
- 12: Antriebsteil
- 14: Lastteil
- 16: Navigationstechnik
- 18: Objekterkennung
- 20: Lastgabel
- 22: Palette
- 24: Objekterkennung
- 26: Millimeterradar
- 28: Videokamera
- 30: zweidimensionales Bild
- 32: Template

## Patentansprüche

1. Flurförderzeug (10) mit einer Objekterkennungseinheit (18, 24), die eine Videokamera (28) und einen Abstandssensor aufweist, wobei die Objekterkennungseinheit (18, 24) dazu ausgebildet ist, für mindestens ein Objekt eine Übereinstimmung in den aufgenommenen Bildern der Videokamera festzustellen, wobei die Objekterkennungseinheit (18, 24) einen vorbestimmten Satz von Templates (32) aufweist, die für zu erkennende Objekte stehen und die Erkennung des Objekts über eines der Templates (32) erfolgt, wobei das Template in seinen Abmessungen bei gleichbleibenden Seitenverhältnissen skaliert wird und das Bild mit dem skalierten Template abgesucht wird, so dass bei Übereinstimmung mit dem skalierten Template aus dessen Seitenverhältnissen Informationen über einen räumlichen Abstand zu dem erfassten Objekt bestimmt werden, und wobei die Objekterkennungseinheit (18, 24) dazu ausgebildet ist, den aus dem oder den aufgenommenen Bildern der Videokamera erfassten Abstandswert mit Hilfe des Abstandssensors zu plausibilisieren, wobei aus den von dem Abstandssensor erfassten Abstandsdaten auch eine perspektivische Transformation des Objekts im Raum erfasst und das Template (32) des zu erkennenden Objekts in einer perspektivischen Transformation entsprechend angepasst wird.

2. Flurförderzeug nach Anspruch 1, **dadurch gekennzeichnet, dass** der Abstandssensor zu den gemessenen räumlichen Abständen auch einen Winkel erfasst, unter dem der räumliche Abstand gemessen wurde.

3. Flurförderzeug (10) nach Anspruch 1 oder 2, **dadurch gekennzeichnet, dass** der Abstandssensor eine Menge von Abstandswerten in Koordinatendarstellung an die Objekterkennungseinheit (18, 24) liefert, die diese im Hinblick auf die ermittelten Abstandswerte auswertet.

4. Flurförderzeug (10) nach einem der Ansprüche 1 bis 3, **dadurch gekennzeichnet, dass** die Objekterkennungseinheit (18, 24) dazu ausgebildet ist, aus der Lage des erkannten Objekts im aufgenommenen Bild und aus den ermittelten Abstandswerten, die Position des Objekts im Raum zu bestimmen.

5. Flurförderzeug (10) nach einem der Ansprüche 1 bis 4, **dadurch gekennzeichnet, dass** als Abstandssensor ein Radarsensor, insbesondere ein Millimeterradarsensor (26) vorgesehen ist.

6. Flurförderzeug (10) nach einem der vorangehenden Ansprüche, **dadurch gekennzeichnet, dass** ein anzeigendes Assistenzsystem vorgesehen ist, das in einem Display das aufgenommene Bild und das erkannte Objekt dargestellt.

## Claims

1. Industrial truck (10) having an object recognition unit (18, 24) which has a video camera (28) and a distance sensor, the object recognition unit (18, 24) being adapted to determine a match in the recorded images of the video camera for at least one object, the object recognition unit (18, 24) having a predetermined set of templates (32) which stand for objects to be recognised and the recognition of the object being carried out via one of the templates (32), wherein the template being scaled in its dimensions with constant aspect ratios and the image being scanned with the scaled template, so that information about a spatial distance to the detected object is determined from the aspect ratios of the scaled template if it matches the scaled template, and wherein the object recognition unit (18, 24) is adapted to check the plausibility of the distance value detected from the recorded image or images of the video camera with the aid of the distance sensor, wherein a perspective transformation of the object in space is also detected from the distance data detected by the distance sensor and the template (32) of the object to be recognised is adapted accordingly in a perspective transformation.

2. Industrial truck according to claim 1, **characterised in that** the distance sensor also detects an angle at which the spatial distance was measured in addition to the measured spatial distances.

3. Industrial truck (10) according to claim 1 or 2, **characterised in that** the distance sensor supplies a set of distance values in coordinate representation to the object recognition unit (18, 24), which evaluates these with regard to the determined distance values.

4. Industrial truck (10) according to one of claims 1 to 3, **characterised in that** the object detection unit (18, 24) is designed to determine the position of the object in space from the position of the detected object in the recorded image and from the determined distance values.

5. Industrial truck (10) according to one of claims 1 to 4, **characterised in that** a radar sensor, in particular a millimetre radar sensor (26), is provided as the distance sensor.

6. Industrial truck (10) according to one of the preceding claims, **characterised in that** a displaying assistance system is provided which shows the captured image and the detected object in a display.

## Revendications

1. Chariot de manutention (10) doté d'une unité de détection d'objets (18, 24), laquelle présente une caméra vidéo (28) et un capteur de distance, dans lequel l'unité de détection d'objets (18, 24) est conçue pour constater une concordance dans les images capturées de la caméra vidéo pour au moins un objet, dans lequel l'unité de détection d'objets (18, 24) présente un ensemble de modèles (32) prédéterminé, lesquels représentent des objets à détecter et la détection de l'objet est effectuée par le biais de l'un des modèles (32), dans lequel le modèle est mis à l'échelle dans ses dimensions avec des proportions constantes et l'image est balayée avec le modèle mis à l'échelle, de sorte que lors d'une concordance avec le modèle mis à l'échelle, des informations concernant une distance spatiale par rapport à l'objet enregistré sont déterminées à partir de ses proportions, et dans lequel l'unité de détection d'objets (18, 24) est conçue pour corroborer la valeur de distance enregistrée à partir de l'image ou des images capturées de la caméra vidéo à l'aide du capteur de distance, dans lequel une transformation en perspective de l'objet dans l'espace est détectée à partir des données de distance enregistrées par le capteur de distance et le modèle (32) de l'objet à détecter est adapté en conséquence dans une transformation en perspective.

2. Chariot de manutention selon la revendication 1, **caractérisé en ce qu'**avec les distances spatiales mesurées, le capteur de distance enregistre également un angle sous lequel la distance spatiale est mesurée.

3. Chariot de manutention (10) selon la revendication 1 ou 2, **caractérisé en ce que** le capteur de distance fournit une quantité de valeurs de distance dans un système de coordonnées à l'unité de détection d'objets (18, 24), laquelle l'évalue quant aux valeurs de distance déterminées.

4. Chariot de manutention (10) selon l'une des revendications 1 à 3, **caractérisé en ce que** l'unité de détection d'objets (18, 24) est conçue pour définir la position de l'objet dans l'espace à partir de la situation de l'objet détecté dans l'image capturée et à partir des valeurs de distance déterminées.

5. Chariot de manutention (10) selon l'une des revendications 1 à 4, **caractérisé en ce qu'**un capteur radar, en particulier un capteur radar millimétrique (26) est prévu en tant que capteur de distance.

6. Chariot de manutention (10) selon l'une des revendications précédentes, **caractérisé en ce qu'**il est prévu un système d'assistance à affichage, lequel présente l'image capturée et l'objet détecté sur un écran.
